(19) Europäisches Patentamt
European Patent Office
Office européen des brevets

(11) Publication number : **0 036 708 B2**

(12) # NEW EUROPEAN PATENT SPECIFICATION

(45) Date of publication of the new patent specification : **10.03.93 Bulletin 93/10**

(51) Int. Cl.$^5$ : **C10M 129/76,** C10M 139/00

(21) Application number : **81300717.6**

(22) Date of filing : **20.02.81**

(54) **Friction reducing additives.**

(30) Priority : **24.03.80 US 133034**

(43) Date of publication of application : **30.09.81 Bulletin 81/39**

(45) Publication of the grant of the patent : **21.03.84 Bulletin 84/12**

(45) Mention of the opposition decision : **10.03.93 Bulletin 93/10**

(84) Designated Contracting States : **AT BE DE FR GB IT NL SE**

(56) References cited :
**GB-A- 1 295 877**
**US-A- 2 795 548**
**US-A- 3 117 089**
**US-A- 3 544 614**
**US-A- 4 107 385**

(73) Proprietor : **MOBIL OIL CORPORATION**
**150 East 42nd Street**
**New York New York 10017 (US)**

(72) Inventor : **Horodysky, Andrew Gene**
**139 Weston Drive**
**Cherry Hill New Jersey 08003 (US)**
Inventor : **Andress, Harry John, Jr,**
**501 East Elm Street**
**Wenonah New Jersey 08090 (US)**
Inventor : **Kaminski, Joan Mary**
**Millbridge Apartments 770**
**Blackwood-Clementon Road**
**New Jersey 08021 (US)**

(74) Representative : **Jones, Alan John et al**
**CARPMAELS & RANSFORD 43 Bloomsbury Square**
**London, WC1A 2RA (GB)**

EP 0 036 708 B2

## Description

Use of borated glycerol esters as friction reducing additives in lubricant compositions

This invention relates to the use of a borated glycerol hydroxyester as a friction reducing additive in lubricant compositions

Many means have been employed to reduce overall friction in modern internal combustion engines, particularly automobile engines. The primary reasons are to reduce engine wear thereby prolonging engine life and to reduce the amount of fuel consumed by the engine thereby reducing the engine's fuel consumption.

Many of the solutions to reducing fuel consumption have been strictly mechanical, as for example, setting the engines for a leaner burn or building smaller cars and smaller engines. However, considerable work has been done with lubricating oils, mineral and synthetic, to enhance their friction properties by modifying them with friction reducing additives.

U.S. Patent No. 3,544,614 discloses complex esters of di- or poly-basic carboxylic acids, polyhydric alcohols, borates and phosphates which function as corrosion inhibitors when incorporated into lubricants.

US-A-2 795 548 discloses that compositions comprising an oil of lubricating viscosity and a complex prepared by the reaction of a mixture of boric acid and a glycol, preferably one containing 2 to 18 carbon atoms, or a polyhydroxy benzene have greatly enhanced anticorrosion properties. Small amounts of complex, usually from about 0.01 to about 5.0 percent by weight based on the oil, are effective to inhibit corrosion. It is mentioned that a substituted glycol, such as glycerol monooleate, may be used instead of the glycol.

US-A-3 117 089 discloses a lubricant composition comprising a major proportion of a base lubricant oil and a small amount, sufficient to inhibit rusting, of an oil-soluble rust-inhibiting boric acid complex of a triol monoester. The triol portion of the complex is an open chain hydrocarbon triol group having from 3 to 10 carbon atoms, and the open chain hydrocarbon portion of the monoester group may contain from 5 to 18 carbon atoms. Said triol monoester may be glyceryl monooleate. Said rust-inhibiting amount is stated advantageously to be from about 0.001 to 10 weight percent of the complex based on the oil.

Glycerol hydroxyesters are known for their friction reducing properties when added to lubricant fluids. However, glycerol hydroxyesters do not adequately control bearing corrision when used in automotive engine oil lubricants possibly because of their reactive OH groups. Borated glycerol hydroxyesters and borated sulfur containing glycerol hydroxyesters provide better friction reduction than their unborated counterparts and, in addition, reduce bearing corrosion to minimal, acceptable levels.

This invention is directed to the use of at least 1% by weight based on the total composition of borated derivatives of glycerol hydroxyesters and borated derivatives of sulfur-containing glycerol hydroxyesters as a friction reducing additive in a lubricant composition comprising a major portion of a lubricating oil. The glycerol or thioglycerol hydroxyesters have the following generalized structural formulae

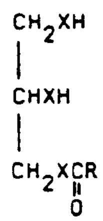

where X is S or O and R is a hydrocarbyl group of from 8 to 24 carbon atoms. The additive compounds also possess significantly improved antioxidant characteristics and bearing corrosion inhibiting properties.

The borated derivatives are produced by the reaction of a glycerol hydroxyester with boric acid in a suitable solvent or solvents at temperatures ranging from 90°C to 280°C to yield products containing at least 0.01 % or more of boron. Specific reaction conditions and molar equivalents of the reactants are well known in the art. Partial or complete boration can be used to impart the beneficial characteristics. An excess of a boron-containing borating reagent can be used. More complete boration is generally preferred. Boration is not limited to the boric acid method, however, any convenient method of boration known to the art may be used. For example, transesterification using a trialkyl borate such as tributyl borate at reaction temperatures up to 270°C.

The glycerol hydroxyesters and thioglycerol hydroxyesters may be prepared by any means known to the art or may be obtained commercially. A non-exhaustive list of glycerol hydroxyesters and thioglycerol hydroxyesters useful herein include glycerol monooleate, monothioglycerolmonooleate, dithioglycerolmonooleate, trithioglycerolmonooleate, glycerol monoricinoleate, and in general, mono- esters of glycerol or mono-, di-, and trithioglycerol such as glycerol laurates, etc. and mono esters such as glycerol laurates, myristates, palmitates,

stearates, phenyl stearates, and unsaturated analogs thereof. Mixtures and various combinations of the above-listed hydroxyesters and thiohydroxyesters are also useful herein.

Thus pure esters or mixtures of esters may be borated. Mixtures can, on occasion, be preferable to the use of pure esters. The amount of additive required to be effective in lubricant compositions may range from 1.0. to about 10 % by weight of the total lubricant composition. Preferred is from 1.0 to 5 wt.%. The additives may be used in combination with any conventional additive for its known purpose, e.g., dispersant, surfactants, antiwear agents, in amounts of up to 10 wt.%.

The lubricants contemplated for use herein include both mineral and synthetic hydrocarbon oils of lubricating viscosity, mixtures of mineral and synthetic oils, and greases or other solid lubricants prepared therefrom. The synthetic hydrocarbon oils include long chain alkanes such as cetanes and olefin polymers such as trimers and tetramers of long chain 2-olefins. Those synthetic oils can be mixed with other synthetic oils which include (1) ester oils such as pentaerythritol esters of monocarboxylic acids having 2 to 20 carbon atoms, (2) polyglycol ethers, (3) polyacetals and (4) siloxane fluids. Especially useful among the synthetic esters are thorn made from polycarboxylic acids and monohydric alcohols. More preferred are the ester fluids made from pentaerythritol, end an aliphatic monocarboxylic acid containing from 1 to 20 carbon atom, or mixtures of such acids.

Example 1

Synthesis of Monothioglycerol Monooleate

A mixture of 1-thioglycerol (70.5 g), 2-pentanone (277 g), and p-toluene sulfonic acid (2 g) was refluxed until the expected 20 $cm^3$ of water formed and was azeotroped off. Oleic acid (163 g) was added to the reaction solution which was then refluxed until the expected 10 $cm^3$ of $H_2O$ azeotroped off. Toluene (800 $cm^3$) was added to the cooled reaction solution, which was then shaken with sodium acetate (6 g), washed with $H_2O$ (4 x 400 $cm^3$) and dried over sodium sulfate. The toluene solution was filtered and the solvents removed via high speed rotary evaporation under reduced pressure. The resulting yellow fluid (190 g) was refluxed in monomethyl ethylene glycol (520 $cm^3$) with boric acid (103 g) at 100 °C for 2 hours. Ether was added (875 $cm^3$) and the entire solution was transferred to a separatory funnel, washed with water (4 x 750 $cm^3$), washed with 13 % sodium bicarbonate solution (2 x 100 $cm^3$) and washed with water (2 x 100 $cm^3$). The ether solution was shaken with sodium acetate (14 g) and 100 $cm^3$of water and then washed with a saturated sodium chloride solution (3 x 150 $cm^3$). The ether solution was dried over magnesium sulfate, stripped free of solvent, and filtered through diatomaceous earth to yield a clear bright yellow oil. Gel permeation chromatography showed that the product was acid free (oleic) and contained approximately 80 % monothioglycerol monooleate and 20 % monothioglycerol dioleate.

Example 2

Borated Monothioglycerol Monooleate

A mixture of monothioglycerol monooleate (214 g), boric acid (24 g), and n-butanol (127 g) was refluxed at 100 to 140°C until the theoretical amount of water, expected to form in the reaction, azeotroped off. The n-butanol was distilled off under vacuum, and the resulting product residue was filtered yielding a clear, orange liquid.

Example 3

Borated Monothioglycerol Monooleate

Monothioglycerol monooleate was borated in a manner identical to that of Example 2 except that the reaction was allowed to proceed until 80 % of the expected water azeotroped off. The unreacted boric acid was filtered, and the n-butanol was distilled off under vacuum. The resulting product was a clear orange fluid.

Example 4

Glycerol Monooleate obtained commercially

Example 5

Borated Glycerol Monooleate

A mixture of glycerol monooleate (1 900 g), boric acid (165 g), and n-butanol (200 g) was refluxed at 140 °C for 6 hours and 250°C for 6 hours until all the water formed in the reaction had azeotroped off an solvent distilled over. No insolubles were visible in the resulting pale orange liquid product.

Example 6

Borated Glycerol Monooleate (Using Excess Boric Acid)

A mixture of glycerol monooleate (1 158 g), boric acid (202 g), and n-butanol (300 g) was refluxed at 275 °C for 6-7 hours until all the water and solvent had been removed. Filtration yielded a pale orange liquid product.

Borated Glycerol Monoricinoleate

A mixture of glycerol monoricinoleate (42 g), boric acid (6.9 g), and n-butanol (106 g) were refluxed at 105-140°C until all water formed in the reaction had azeotroped over. Solvent was distilled off under reduced pressure at 175°C. The resulting rust-colored, very viscous product was sparingly soluble in mineral oil.

Each of the above examples was then individually incorporated into a fully formulated 5W-20 engine oil having the following general characteristics; KV @ 100 °C - 6.8 x $10^6$ $mm^2/s$; KV @ 40 °C - 36.9 x $10^6$ $mm^2/s$; VI - 143 and evaluated using the Low Velocity Friction Apparatus. Certain of the examples were also subjected to the CRC L-38 Bearing Corrosion Test, which is a well-know test, utilizing a single-cylinder, spark-ignited engine and which is designed to determine bearing corrosion and deposit forming characteristics of lubricants under high temperature oxidation conditions.

Low Velocity Friction Apparatus (LVFA)

The Low Velocity Friction Apparatus (LVFA) is used to measure the friction of test lubricants under various loads, temperatures, and sliding speeds. The LVFA consists of a flat SAE 1020 steel surface having a diameter of 3.8 cm (1.5 in.) which is attached to a drive shaft and rotated over a stationary, raised, narrow ringed SAE 1020 steel surface having a surface area of 50 $mm^2$ (0.08 $in.^2$). Both surfaces are submerged in the test lubricant. Friction between the steel surfaces is measured as a function of the sliding speed at a lubricant temperature of 120°C (250°F). The friction between the rubbing surfaces is measured using a torque arm strain gauge system. The strain gauge output, which is calibrated to be equal to the coefficient of friction, is fed to the Y axis of an X-Y plotter. The speed signal from the tachometer-generator is fed to the X-axis. To minimize external friction, the piston is supported by an air bearing. The normal force loading the rubbing surfaces is regulated by air pressure on the bottom of the piston, The drive system consists of an infinitely variable-speed hydraulic transmission driven by a 370.W output (1/2 HP) electric motor. To vary the sliding speed, the output speed of the transmission is regulated by a lever cam-motor arrangement.

Procedure

The rubbing surfaces and 12-13 ml. of test lubricant are placed on the LVFA. A 3 400 K Pa load (500 psi) is applied, and the sliding speed is maintained at 9. m/min (30 fpm) at ambient temperature for a few minutes. A plot of coefficients of friction ($U_k$) over a range of sliding speeds, 1.5 to 12 m/min (5 to 40 fpm, 25-195 rpm), is obtained. A minimum of three measurements is obtained for each test lubricant. Then, the test lubricant and specimens are heated to 120 °C (250 °F), another set of measurements is obtained, and the system is run for 50 minutes at 120 °C (250 °F), 3 400 k Pa (500 psi), and 12 m/min (40 fpm) sliding speed. Freshly polished steel specimens are used for each run. The surface of the steel is parallel ground to 100 to 200 nm (4 to 8 microinches). The percentages by weight are percentage by weight of the total lubricating oil composition, including the usual additive package. The data are percent decrease in friction according to :

$$\frac{(U_k \text{ of oil alone}) - (U_k \text{ of additive plus oil}) \times 100}{(U_k \text{ of oil alone})}$$

The value for the oil alone would be zero as shown in the Table below.

**Table**
**Results Using LVFA**

| Additive | Conc. (Wt. %) | % Change in Coefficient of Friction in LVFA at 1.5 m/min. (5 Ft./Min.) | 9. m/min. (30 Ft./Min.) |
|---|---|---|---|
| Base Fluid[a] | -- | 0 | 0 |
| Base Fluid plus Example 1, monothioglycerol monooleate | 4 | -5 | -1 |
| Base Fluid plus Example 2, borated monothioglycerol monooleate | 4<br>2 | 41<br>28 | 33<br>14 |

Table (continued)

Results Using LVFA

| Additive | Conc. (Wt. %) | % Change in Coefficient of Friction in LVFA at 1.5 m/min. (5 Ft./Min.) | 9. m/min. (30 Ft./Min.) |
|---|---|---|---|
| Base Fluid plus [b] Example 3, borated monothioglycerol monooleate (Partially Borated) | 4<br>2<br>1 | 20<br>18<br>16 | 18<br>12<br>16 |
| Base Fluid plus Example 4, glycerol monooleate[c] | 4<br>2 | 21<br>15 | 22<br>17 |
| Base Fluid plus Example 5, borated glycerol monooleate | 2 | 40 | 30 |
| Base Fluid plus Example 6, borated glycerol monooleate[b] (excess boric acid used) | 4 | 25 | 16 |
| Base Fluid plus Example 7, borated glycerol monoricinoleate | 2 | 18 | -- |

(a) A fully formulated engine oil consisting of base fluid and 20 % by weight of an additive package containing antioxidant, detergent, and dispersant, having the following general characteristics : KV @ 100 °C — 6.8 × $10^6$ $mm^2/s$ ; KV @ 40 °C — 36.9 × $10^6$ $mm^2/s$ ; VI — 143.
(b) Passed L-38 bearing corrosion test after 80 hrs.
(c) Failed L-38 bearing corrosion test after 40 hrs.

The test data establishes that the borated hydroxyesters and borated sulfur containing hydroxyesters are more efficient friction reducers than their non-borated counterparts. A significant reduction in the coefficient of friction was observed relative to the base oil or the base oil containing the non-borated monothioglycarol monooleate or glycerol monooleate. Furthermore, these borated derivatives retain anti-friction behavior at low concentrations, i. e., 1 % and 2 % by weight. Also, the boration provides protection against bearing corrosion thereby imparting multifunctional additive properties to the borated glycerol esters while the non-borated glycarol hydroxyesters failed the L-38 test after only 40 hours.

## Claims

1. Use of at least 1% by weight based on the total composition of a borated glycerol or a borated thioglycerol produced by borating a glycerol or thioglycerol of the formula :

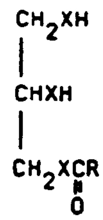

wherein each X is S or O, and R is a hydrocarbyl group of from 8 to 24 carbon atoms, as a friction reducing additive in a lubricant composition comprising a major portion of a lubricating oil.

2. Use according to Claim 1, wherein X is O, R contains 17 carbon atoms and the ester is glycerol monooleate.

3. Use according to Claim 1, wherein X is S, R contain 17 carbon atoms and the ester is monothioglycerol monooleate.

## Patentansprüche

1. Verwendung von boriertem Glycerin oder boriertem Thioglycerin in einer Menge von mindestens 1 Gew.% auf der Basis der gesamten Zusammensetzung, das durch Borieren von Glycerin oder Thioglycerin der Formel

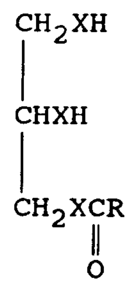

hergestellt wurde,

worin jedes X S oder O ist und R eine Kohlenwasserstoffgruppe mit 8 bis 24 Kohlenstoffatomen ist, als reibungsmindernder Zusatz in einer Schmiermittelzusammensetzung, die einen Hauptanteil eines Schmieröles enthält.

2. Verwendung nach Anspruch 1, worin X O ist, R 17 Kohlenstoffatome enthält und der Ester Glycerinmonooleat ist.

3. Verwendung nach Anspruch 1, worin X S ist, R 17 Kohlenstoffatome enthält und der Ester Monothioglyerinmonooleat ist.

## Revendications

1. Utilisation d'au moins 1% en poids, de la composition totale, d'un ester de glycérol boraté ou d'un ester de thioglycérol boraté produit par boratation d'un ester de glycérol ou d'un ester de thioglycérol de formule :

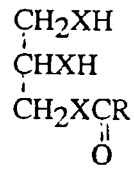

dans laquelle chaque X est S ou O et R est un groupe hydrocarbyle ayant de 8 à 24 atomes de carbone, comme additif réduisant le frottement dans une composition lubrifiante comprenant une portion principale d'une huile lubrifiante.

2. Utilisation selon la revendication 1, dans laquelle X est O, R contient 17 atomes de carbone et l'ester est le monooléate de glycérol.

3. Utilisation selon la revendication 1, dans laquelle X est S, R contient 17 atomes de carbone et l'ester le monooléate de monothioglycérol.